(19) Europäisches Patentamt
European Patent Office
Office européen des brevets

(11) EP 2 876 128 A1

(12) # EUROPÄISCHE PATENTANMELDUNG

(43) Veröffentlichungstag:
**27.05.2015 Patentblatt 2015/22**

(51) Int Cl.:
***C08G 65/30*** *(2006.01)* ***C08G 65/46*** *(2006.01)*
***C08G 83/00*** *(2006.01)*

(21) Anmeldenummer: **14194421.5**

(22) Anmeldetag: **24.11.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **25.11.2013 EP 13194233**

(71) Anmelder: **BASF SE**
**67056 Ludwigshafen (DE)**

(72) Erfinder:
- **Lindner, Jean-Pierre-Berkan**
  **68165 Mannheim (DE)**
- **Thomas, Hans-Josef**
  **41352 Korschenbroich (DE)**

(74) Vertreter: **Jacobi, Markus Alexander**
**Isenbruck Bösl Hörschler LLP**
**Eastsite One**
**Seckenheimer Landstrasse 4**
**68163 Mannheim (DE)**

(54) **Verfahren zum Aufreinigen von wasserlöslichen hochverzweigten Polyethern**

(57) Die vorliegende Erfindung betrifft ein Verfahren zum Aufreinigen einer Polymer-Rohlösung R enthaltend mindestens einen hochverzweigten (dendritischen) Polyether P und mindestens ein organisches Lösungsmittel L, wobei die Polymer-Rohlösung R mit mindestens einer wässrigen Salzlösung S enthaltend mindestens ein kosmotropes Salz in Kontakt gebracht wird, wobei sich mindestens zwei Phasen ausbilden, die anschließend getrennt werden. Optional kann der gewünschte hochverzweigten Polyether P aus einer der Phasen isoliert werden.



Printed by Jouve, 75001 PARIS (FR)

## Beschreibung

Die vorliegende Erfindung betrifft ein Verfahren zum Aufreinigen einer Polymer-Rohlösung R, enthaltend mindestens einen hochverzweigten (dendritischen) Polyether P und mindestens ein organisches Lösungsmittel L, wobei die Polymer-Rohlösung R mit mindestens einer Salzlösung S, enthaltend mindestens ein kosmotropes Salz K, in Kontakt gebracht wird, wobei sich mindestens zwei Phasen ausbilden, die anschließend getrennt werden. Optional kann der gewünschte hochverzweigte Polyether P aus einer der Phasen isoliert werden.

Hochverzweigte (dendritische) Polyether werden beispielsweise als Dispergiermittel oder als Betonverflüssiger eingesetzt. Oftmals dienen dendritische Polyether als Ausgangsverbindungen zur Herstellung von Verdickern, beispielsweise für Wasch- oder Reinigungsmittel. Die endständigen Hydroxygruppen (-OH) können mit weiteren Verbindungen umgesetzt oder mit einem weiteren Monomer polymerisiert werden. Dendritische Polyether können beispielsweise zur Modifizierung der Kettenlänge von Polyurethanen verwendet werden.

Hochverzweigte, dendritische Polymere zeichnen sich ganz allgemein durch eine stark verzweigte, nicht vernetzte Struktur und eine hohe Funktionalität aus. Aufgrund ihrer Struktur weisen hochverzweigte Polymere besondere, vorteilhafte Eigenschaften auf, z.B. eine überraschend geringe Viskosität und eine hohe Reaktivität aufgrund der hohen Anzahl funktioneller Gruppen an der Oberfläche. Charakteristische Merkmale von hochverzweigten, dendritischen Polymeren, im Gegensatz zu linearen Polymeren oder normalen statistisch verzweigten Polymeren, sind insbesondere die Abwesenheit von Verwicklungen und die geringe Viskosität in der Masse.

Hochverzweigte oder dendritische Polymere können beispielsweise durch Polymerisation von trifunktionellen Monomeren, z.B. ausgehend von $AB_2$-Monomeren, hergestellt werden. Es können hochverzweigte, nicht vernetzte Makromoleküle mit einer Vielzahl von Endgruppen erhalten werden. Je nach Struktur unterscheidet man bei hochverzweigten Polymeren zum Beispiel Dendrimere, hyperverzweigte Polymere oder Dendronen.

Dendrimere sind molekular einheitliche Makromoleküle mit einem hoch symmetrischen Aufbau (im Idealfall kugelförmig), worin alle Verzweigungspunkte genutzt werden. Infolge ihrer wohldefinierten Struktur ist die Synthese von Dendrimeren sehr aufwendig und kostenintensiv.

Hyperverzweigte Polymere können dendrimere Substrukturen aufweisen, sind aber sowohl molekular wie strukturell uneinheitlich und werden üblicherweise durch einfaches Vermischen der Komponenten und deren Reaktion in einer sogenannten Ein-Topf-Reaktion erhalten. Dendronen sind hochverzweigte Polymere, die im Gegensatz zu Dendrimeren und hyperverzweigten Polymeren keine Sternpolymere sind, sondern eine Baum-ähnliche Struktur aufweisen. Dendronen können oftmals eine Zwischenstufe bei der konvergenten Synthese von Dendrimeren darstellen.

Hochverzweigte Polyether und Verfahren zu deren Herstellung und Modifizierung sind im Stand der Technik beschrieben:

> WO 2010/000713 offenbart linear-dendritische Polyglycerolverbindungen und ihre Herstellung mittels der sogenannten CLICK-Reaktion (1 ,3-dipolare Cycloaddition von Alkin und Azid unter Ausbildung eines Triazol-Rings). Diese Verbindungen können zur Solubilisierung von hydrophoben Substanzen eingesetzt werden.

WO 2011/0006838 beschreibt Copolymere, enthaltend hochverzweigte Polyether-Strukturen, und deren Verwendung als Verdicker. Zudem werden Polyether-Dendronen und ihre Herstellung beschrieben.

WO 2012/028527 beschreibt Assoziativ-Verdicker auf Basis von Verbindungen, die wenigstens ein hydrophob modifiziertes Polyether-Dendron als Endgruppe umfassen.

WO 2006/008130 beschreibt ein kontinuierliches Verfahren zur Herstellung von Polyalkylenarylaten, welche hyperverzweigte Polyester und/oder Polycarbonate enthalten.

Typischerweise können hochverzweigte dendritische Polyether (insbesondere Polyether-Dendronen) durch die Umsetzung mindestens einer organischen Verbindung der allgemeinen Formel $R^1$-OH mit Glycerin, oder vorzugsweise einem reaktiven Derivat von Glycerin (wie Epichlorhydrin, Glycidol oder Glycerincarbonat, insbesondere mit Epichlorhydrin), erhalten werden. Die Umsetzung erfolgt in der Regel in der Gegenwart eines basischen Katalysators. Als basischer Katalysator eignen sich anorganische oder organische Basen, wie Alkali- und Erdalkalimetallhydroxide und Alkali- und Erdalkalimetallcarbonate, bevorzugt Alkalimetallcarbonate und Alkalimetallhydroxide, wie Natriumhydroxid. Oftmals wird die Reaktion in einem organischen Lösungsmittel durchgeführt, wie z.B. Toluol.

Um ein entsprechend verzweigtes (dendritisches) Polymer zu erhalten, führt man die Umsetzung typischerweise stufenweise durch und zwar in so vielen Stufen, wie sie der gewünschten Struktur entspricht. Dabei kann ein reaktives Derivat von Glycerin, insbesondere Epichlorhydrin, in der betreffenden Zahl an Reaktionsstufen zugesetzt werden.

Die Herstellung hochverzweigter Polyether, insbesondere Polyether-Dendronen, ist beispielsweise in WO 2011/0006838 auf den Seiten 20 und 21 beschrieben.

In der Regel wird mit einem Überschuss des basischen Katalysators, z.B. Natriumhydroxid, gearbeitet, um sicherzustellen, dass die gesamte Menge des eingesetzten Epichlorhydrins abreagiert. Als Nebenprodukt entsteht Natriumchlorid. Das Nebenprodukt Natriumchlorid und das überschüssige Natriumhydroxid können bei der weiteren Aufarbeitung und Verwendung des hochverzweigten Polyethers stören und müssen daher in der Regel aus der Polymer-Rohlösung abgetrennt werden.

Üblicherweise wird hierzu der basische Katalysator, z.B. Natriumhydroxid, durch Säure-Zusatz ausgefällt und durch Filtration abgetrennt. Eine Filtration ist allerdings aufgrund langer Filtrationszeiten und der problematischen Entsorgung des Filterrückstandes aufwendig und nicht wirtschaftlich.

Das Dokument US 5,962,749 beschreibt ein Verfahren zur Reinigung eines Polyetherpolyols, der unter Verwendung eines Alkalimetall-Katalysators hergestellt wurde. Hierbei wird Glycerin zu dem Polyether-Polyol zugegeben. Das entstehende Präzipitat, enthaltend AlkaliGlycerinsalze, wird abgetrennt und kann als Katalysator wiederverwendet werden.

Eine Extraktion der Salzfracht aus der organischen Polymer-Rohlösung in einer Flüssig/Flüssig-Extraktion mit Wasser ist nicht einfach durchzuführen, da das gewünschte polymere Produkt (hochverzweigter Polyether) wasserlöslich ist und sich ein hoher Verlust an Wertprodukt ergeben kann. Es besteht somit ein hoher Bedarf an einem einfachen und kostengünstig durchzuführenden Verfahren, mit welchem die störende Salzfracht aus der Polymer-Rohlösung nach der Herstellung entfernet werden kann. Dabei sollten möglichst kein hochverzweigter Polyether oder nur sehr geringe Mengen an hochverzweigtem Polyether verloren gehen.

Im Stand der Technik wird beschrieben, dass die Zugabe bestimmter Salzanionen und Salzkationen einen Einfluss auf die Löslichkeit von Makromonomeren, z.B. Proteinen, haben kann. Dieser Effekt wird oftmals als Hofmeister-Effekt beschrieben. Dabei kann die Zugabe eines Salzes die Löslichkeit des Makromoleküls in Wasser erhöhen (durch chaotrope Ionen, "salting-in Effekt") oder verringern (durch antichaotrope oder kosmotrope Ionen, "salting-out Effekt"). Für Proteine wird der Einfluss verschiedener Anionen durch die sogenannte Hofmeister Reihe beschrieben. Ein Ansatz einer Erklärung basiert auf dem Einfluss der verschiedenen Ionen auf die Hydrathülle der Protein-Makromoleküle.

In der Literatur wird der Hofmeister-Effekt ebenso in Bezug auf verschiedene, hydrophobe, wasserlösliche Polymere beschrieben. Die Publikation Thorman E. (RSC Advances, 2012, 2, 8297-8305) beschriebt den Einfluss verschiedener Anionen auf die Löslichkeit von Polypropylenoxid in Wasser, wobei es sich um ein lineares Polypropylenoxid mit einem Molekulargewicht Mwvon etwa 2.000 g/mol handelt. Die Publikation Yang Lu et al. (Journal of Chemical and Engineering Data, 2013, 58(1), 118-127) beschreibt den Einfluss von Kaliumsalzen auf wässrige Zwei-Phasen-Systeme, enthaltend das lineare nicht-ionische Tensid Polyoxyethylen (10)-Laurylether (POELE10).

Es wurde nun überraschenderweise gefunden, dass die organischen Polymer-Rohlösungen, welche bei der Herstellung von hochverzweigten Polyethern (z.B. Polyalkylenglykole, Polyglycerol-Verbindungen) anfallen, durch die Zugabe von wässrigen Lösungen kosmotroper Salze in einer Flüssig-Flüssig-Extraktion extrahiert werden können, wobei die zu entfernenden Salze (z.B. Alkali- und Erdalkalihydroxide, Alkali- und Erdalkalicarbonate und Alkali- und Erdalkalihalogenide) in die wässrige Phase übergehen. Das gewünschte Polyether-Produkt verbleibt in der organischen Phase und/oder es wird eine dritte, polymerreiche Phase (Polymerphase) gebildet. Es wurde gefunden, dass somit eine Abtrennung des gewünschten Polymer-Produktes von der störenden Salzfracht mit sehr geringem oder ohne Verlust an Wertprodukt (hochverzweigter Polyether) möglich ist.

Durch die Zugabe von kosmotropen Salzen lässt sich überraschenderweise die Löslichkeit von hochverzweigten Polyethern in der wässrigen Phase erniedrigen, so dass der verzweigte Polyether weitgehend in der organischen Phase verbleibt oder eine dritte Phase ausbildet. So ist es möglich, die Salzfracht, z.B. Natriumsalze, aus der organischen Polymer-Rohlösung zu extrahieren, ohne dass das wasserlösliche polymere Produkt (hochverzweigter Polyether) ebenfalls in die wässrige Phase übergeht.

Die vorliegende Erfindung betrifft insbesondere ein Verfahren zum Aufreinigen einer Polymer-Rohlösung R, enthaltend mindestens einen hochverzweigten Polyether P und mindestens ein organisches Lösungsmittel L, umfassend die Schritte

a) in Kontakt bringen der Polymer-Rohlösung R mit mindestens einer wässrigen Salzlösung S, welche mindestens ein kosmotropes Salz K enthält, wobei sich mindestens zwei Phasen ausbilden; wobei die mindestens zwei Phasen ausgewählt sind aus einer wässrigen Phase, einer organischen Phase und/oder einer Polymerphase;

b) Trennen der mindestens zwei Phasen.

Durch das erfindungsgemäße Extraktionsverfahren ist es möglich, das gewünschte Produkt (den hochverzweigten Polyether P) einfacher und in wenigen Schritten und in guten bis sehr guten Ausbeuten aus der Polymer-Rohlösung zu gewinnen. Die übliche Aufreinigung von Polymer-Rohlösungen, enthaltend hochverzweigte Polyether, erfolgt durch das Neutralisieren und aufwendige und zeitintensive Abfiltrieren der ausgefällten Salze. Das erfindungsgemäße Verfahren ist zudem einfach und kostengünstig durchzuführen, wobei insbesondere einfache bekannte Verfahren und Vorrichtungen zur Flüssig/Flüssig-Extraktion angewendet werden können.

Im Sinne der vorliegenden Erfindung sind hochverzweigte (dendritische) Polyether unvernetzte Polymere, die Ethergruppen und endständige Hydroxylgruppen (-OH) umfassen und einen hohen Anteil an verzweigten Einheiten

aufweisen. Insbesondere weisen hochverzweigte Polyether einen Verzweigungsgrad DB ("degree of branching") im Bereich von 0,3 bis 1, insbesondere 0,5 bis 1, bevorzugt 0,3 bis 0,6, besonders bevorzugt 0,4 bis 0,6 auf. Die Definition des Verzweigungsgrad ist beispielsweise in H. Frey et al., Acta Polym. 1997, 48, 30 beschrieben. Der mittlere Verzweigungsgrad DB kann beispielsweise wie folgt berechnet werden:

$$DB=(T+Z)/(T+Z+L),$$

wobei T die mittlere Anzahl der terminalen Monomereinheiten, Z die mittlere Anzahl der verzweigten Monomereinheiten und L die mittlere Anzahl der linearen Monomereinheiten in den jeweiligen Makromolekülen bedeuten. Beispielsweise können die terminalen, verzweigten und linearen Monomereinheiten mittels NMR-Spektroskopie bestimmt werden.

Polyether-Dendrimere (Polyether mit Dendrimer-Struktur) sind, im Sinne der vorliegenden Erfindung, hochverzweigte Polyether, welche strukturell und molekular einheitlich sind und, ausgehend von einem Kernmolekül, verzweigte Molekülketten (Dendronen) aufweisen. Polyether-Dendrimere sind insbesondere dadurch gekennzeichnet, dass weitgehend nur perfekt verzweigte Einheiten ohne Fehlstellen vorliegen. Insbesondere weisen Polyether-Dendrimere einen Verzweigungsgrad von 0,3 bis 1; bevorzugt 0,5 bis 0,9, bevorzugt 0,5 bis 1; insbesondere bevorzugt von 0,8 bis 1 auf.

Ein Polyether-Dendron (Polyether mit Dendron-Struktur) ist, im Sinne der Erfindung, ein hochverzweigter Polyether, welcher eine baumartige Struktur aufweist. Polyether-Dendronen sind insbesondere dadurch gekennzeichnet, dass weitgehend nur perfekt verzweigte Einheiten ohne Fehlstellen vorliegen. Insbesondere weisen Polyether-Dendronen einen Verzweigungsgrad von 0,3 bis 1; bevorzugt 0,5 bis 0,9, bevorzugt 0,5 bis 1; insbesondere bevorzugt von 0,8 bis 1 auf.

Hyperverzweigte Polyether sind im Sinne dieser Erfindung hochverzweigte Polyether, die sowohl strukturell als auch molekular uneinheitlich sind. Sie können ausgehend von einem Zentralmolekül Äste mit uneinheitlicher Kettenlänge und/oder lineare Strukturen mit funktionellen Seitengruppen umfassen. Hyperverzweigte Polyether können dendrimere Substrukturen aufweisen. Insbesondere weisen hyperverzweigte Polyether einen Verzweigungsgrad von 0,3 bis 1, insbesondere 0,5 bis 1, bevorzugt 0,3 bis 0,6, besonders bevorzugt 0,4 bis 0,6 auf.

Die Definitionen von dendrimeren und hyperverzweigten Polymeren sind beispielsweise in P.J. Flory, J. Am. Chem. Soc. 1952, 74, 2718 und H. Frey et al., Chem. Eur. J. 2000, 6, No. 14, 2499 beschrieben.

Ganz allgemein sind hyperverzweigte Polymere und Dendrimere Bezeichnungen für Polymere, die sich durch eine stark verzweigte Struktur und eine hohe Funktionalität auszeichnen. Zwischen Dendrimeren und hyperverzweigten Polymeren bestehen aber dennoch deutliche Unterschiede im Aufbau: Dendrimere sind molekular einheitliche Makromoleküle mit einem hoch symmetrischen Aufbau. Dendrimere lassen sich, ausgehend von einem zentralen Molekül, durch kontrollierte, schrittweise Verknüpfung von jeweils zwei oder mehr di- oder multifunktionellen Monomeren mit jedem bereits gebundenen Monomer herstellen (divergenter Ansatz). Dabei vervielfacht sich mit jedem Verknüpfungsschritt die Zahl der Monomer-Endgruppen (und damit der Verknüpfungen) um den Faktor 2 oder höher, und man erhält generationenweise aufgebaute, monodisperse Polymere mit baumartigen Strukturen, im Idealfall kugelförmig, deren Äste jeweils exakt dieselbe Anzahl von Monomereinheiten enthalten. Ein weiterer Ansatz besteht darin, die Monomere so zu verknüpfen, dass man die Strukturen von der Peripherie her aufbaut, bis man schließlich bei monofunktionellen, baumartigen Strukturen angelangt ist (konvergenter Ansatz). Unter monofunktionell wird in diesem Zusammenhang die Monofunktionalität der fokalen Einheit verstanden.

Im Gegensatz dazu sind hyperverzweigte Polymere allgemein sowohl molekular wie strukturell uneinheitlich, d.h. die Moleküle des Polymers weisen sowohl eine Verteilung hinsichtlich des Molekulargewichtes als auch hinsichtlich der Struktur der Moleküle auf. Sie werden durch einen nicht-generationenweisen Aufbau erhalten. Es ist daher auch nicht notwendig, Zwischenprodukte zu isolieren und zu reinigen. Hyperverzweigte Polymere können durch einfaches Vermischen der zum Aufbau erforderlichen Komponenten und deren Reaktion in einer sogenannten Ein-Topf-Reaktion erhalten werden. Hyperverzweigte Polymere können dendrimere Substrukturen aufweisen. Daneben können sie aber auch lineare Polymerketten und ungleiche Polymeräste aufweisen. Nachteilig an hyperverzweigten Polymeren ist, dass sie in der Regel nur sehr schwierig einheitlich monofunktionell erhalten werden können, da oftmals mehrere fokale Gruppen in ein und demselben Makromolekül eingebaut bzw. speziell einkondensiert werden.

Unter einem chaotropen Salz versteht man, im Sinne der vorliegenden Erfindung, ein Salz, welches die Löslichkeit von gelösten Makromolekülen, insbesondere von hochverzweigten Polyethern, in Wasser erhöht. Unter einem antichaotropen oder kosmotropen Salz versteht man, im Sinne der vorliegenden Erfindung, ein Salz, welches die Löslichkeit von gelösten Makromolekülen, insbesondere von hochverzweigten Polyethern, in Wasser erniedrigt. Erhöhung oder Erniedrigung der Löslichkeit meint, dass durch die Zugabe des Salzes eine Erhöhung oder Erniedrigung der Löslichkeit erfolgt, im Vergleich zu der Löslichkeit des entsprechenden Makromoleküls, insbesondere des hochverzweigten Polyethers, in Wasser (ohne Salzzugabe).

Die vorliegende Erfindung betrifft das oben beschriebene Verfahren zum Aufreinigen einer Polymer-Rohlösung

R, enthaltend mindestens einen hochverzweigten Polyether P und mindestens ein organisches Lösungsmittel L, wobei es sich insbesondere um Polymer-Rohlösungen R handelt, die typischerweise bei der Herstellung von hochverzweigten Polyethern als Produkt (Rohprodukt) anfallen.

Insbesondere enthält die Polymer-Rohlösung R neben dem gewünschten polymeren Produkt (hochverzweigter Polyether P) und dem organischen Lösungsmittel L einen basischen Katalysator B. Insbesondere handelt es sich um einen basischen Katalysator B, welcher üblicherweise bei der Herstellung hochverzweigter Polyether P eingesetzt wird. Insbesondere kann es sich bei dem basischen Katalysator B um eine anorganische oder organische Basen, bevorzugt eine anorganische Base, handeln. Die anorganische Base kann beispielsweise ausgewählt werden aus Alkalimetallcarbonaten, Alkalimetallhydroxiden, Erdalkalimetallcarbonaten und Erdalkalimetallhydroxiden, bevorzugt aus Alkalimetallcarbonaten und Alkalimetallhydroxiden, wie Natriumhydroxid. Geeignete organische Basen sind beispielsweise tertiäre Amine, insbesondere Triethyl-amin und [2,2,2]Diazabicyclooctan (DABCO), sowie Pyridin und para-N,N-Dimethylaminopyridin. Im Sinne der vorliegenden Erfindung umfasst basischer Katalysator B auch die Salze, die bei der Polymerisation der hochverzweigten Polyether und/oder durch Neutralisation der oben genannten basischen Katalysatoren B entstehen, z.B. Alkalimetallhalogenide, wie Natriumchlorid.

Bevorzugt kann die Polymer-Rohlösung R als basischen Katalysator B mindestens ein Alkalimetallcarbonat, Alkalimetallhydroxid (insbesondere bevorzugt NaOH und/oder KOH) und/oder Alkalimetallhalogenid (insbesondere bevorzugt NaCl und/oder KCl) enthalten. Insbesondere enthält die Polymer-Rohlösung R, neben dem hochverzweigten Polyether P und dem organischen Lösungsmittel L, als basischen Katalysator B mindestens ein Salz ausgewählt aus Alkaliund Erdalkalimetallhydroxiden und Alkali- und Erdalkalimetallhalogeniden, beispielsweise Natriumhydroxid (NaOH) und/oder Natriumchlorid (NaCl).

Insbesondere betrifft die Erfindung ein oben beschriebenes Verfahren, wobei die Polymer-Rohlösung R, neben dem hochverzweigten Polyether P und dem organischen Lösungsmittel L, mindestens einen der oben beschriebenen basischen Katalysator B enthält, und wobei die folgenden Schritte umfasst sind

a) in Kontakt bringen der Polymer-Rohlösung R mit mindestens einer wässrigen Salzlösung S, welche mindestens ein kosmotropes Salz K enthält, wobei sich mindestens zwei Phasen ausbilden; wobei die mindestens zwei Phasen ausgewählt sind aus einer wässrigen Phase, einer organischen Phase und/oder einer Polymerphase;
wobei der hochverzweigte Polyether P in der organischen Phase und/oder Polymerphase enthalten ist, und wobei das kosmotrope Salz K und/oder der basische Katalysator B in der wässrigen Phase enthalten sind,

b) Trennen der mindestens zwei Phasen.

Insbesondere sind mindestens 90 Gew.-%, bevorzugt mindestens 95 Gew.-%, besonders bevorzugt mindestens 99 Gew.-% des hochverzweigten Polyethers P in der organischen Phase und/oder der Polymerphase enthalten, bezogen auf die Gesamtmenge des in der ursprünglichen Polymer-Rohlösung R enthaltenen hochverzweigten Polyethers P. Analoge Werte gelten für das kosmotrope Salz K und/oder den basischen Katalysator B in der wässrigen Phase.

Bei dem erfindungsgemäßen Verfahren bilden sich in Schritt a) mindestens zwei Phasen aus; wobei die mindestens zwei Phasen ausgewählt sind aus einer wässrigen Phase, einer organischen Phase und/oder einer Polymerphase. In einer bevorzugten Ausführungsform bilden sich in Schritt a) des erfindungsgemäßen Verfahrens genau eine wässrige Phase und genau eine organische Phase, wobei die wässrige Phase das kosmotrope Salz K und den basischen Katalysator B enthält; und wobei die organische Phase den mindestens einen hochverzweigten Polyether P enthält. Insbesondere enthält die organische Phase nach Schritt a) den wesentlichen Anteil, beispielsweise mindestens 90 Gew.-%, bevorzugt mindestens 95 Gew.-%, besonders bevorzugt mindestens 99 Gew.-% des hochverzweigten Polyethers P, bezogen auf die Gesamtmenge des in der ursprünglichen Polymer-Rohlösung R enthaltenen hochverzweigten Polyethers P. Analoges gilt für das kosmotrope Salz K und/oder den basische Katalysator B in der wässrigen Phase.

In einer weiteren bevorzugten Ausführungsform bilden sich in Schritt a) des erfindungsgemäßen Verfahrens genau eine wässrige Phase, genau eine organische Phase, und genau eine Polymerphase, wobei die wässrige Phase das kosmotrope Salz K und den basischen Katalysator enthält; und wobei die Polymerphase den mindestens einen hochverzweigten Polyether P enthält. Insbesondere enthält die Polymerphase nach Schritt a) den wesentlichen Anteil, beispielsweise mindestens 90 Gew.-%, bevorzugt mindestens 95 Gew.-%, besonders bevorzugt mindestens 99 Gew.-% des hochverzweigten Polyethers P, bezogen auf die Gesamtmenge des in der ursprünglichen Polymer-Rohlösung R enthaltenen hochverzweigten Polyethers P. Analoge Werte gelten für das kosmotrope Salz K und/oder den basischen Katalysator B in der wässrigen Phase.

In einer bevorzugten Ausführungsform umfasst das oben beschriebene Verfahren den folgenden zusätzlichen Schritt c:

c) Isolieren des mindestens einen hochverzweigten Polyethers P aus einer der abgetrennten Phasen, insbesondere aus der organischen Phase und/oder der Polymerphase.

Das Isolieren des hochverzweigten Polyethers P, insbesondere aus der organischen Phase und/oder der Polymerphase, kann beispielsweise durch Abdampfen des Lösungsmittels und/oder Destillation erfolgen.

Die Polymer-Rohlösung R kann typischerweise, neben dem hochverzweigten Polyether P, dem organischen Lösungsmittel L und dem basischen Katalysator B, weitere Komponenten enthalten, insbesondere Substanzen, welche bei der Herstellung des hochverzweigten Polyethers P oftmals eingesetzt werde, z.B. die später beschriebenen Wasser-entziehenden Mittel. Es ist zudem möglich, dass die Polymer-Rohlösung R ein oder mehrere später beschriebene kosmotrope Salze K enthält.

Bei dem hochverzweigten (dendritischen) Polyether P kann es sich beispielsweise um einen Polyether mit Dendron-Struktur (Polyether-Dendron), Dendrimer-Struktur (Polyether-Dendrimer) oder hyperverzweigter Struktur (hyperverzweigter Polyether) handeln. Insbesondere betrifft die Erfindung ein Verfahren zum Aufreinigen einer Polymer-Rohlösung R, enthaltend mindestens ein Polyether-Dendron.

Insbesondere handelt es sich bei dem hochverzweigten Polyether P um eine Verbindung gemäß der folgenden Formel (I),

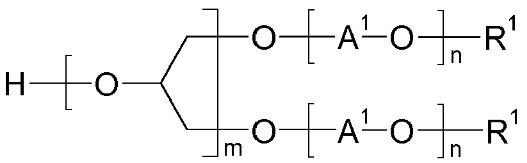

(I)

wobei die Reste und Indizes die folgenden Bedeutungen haben:

- $R^1$: ist unabhängig voneinander H, $C_1$-$C_{30}$-Alkyl, $C_3$-$C_{10}$-Cycloalkyl, $C_6$-$C_{30}$-Aryl, $C_7$-$C_{30}$-Arylalkyl,
- $A^1$: ist unabhängig voneinander $C_2$-$C_{20}$-Alkylen, $C_6$-$C_{10}$-Arylen oder $C_7$-$C_{10}$-Arylalkylen;
- n: ist unabhängig voneinander eine Zahl von 0 bis 200, bevorzugt 1 bis 150, besonders bevorzugt 5 bis 50, ganz besonders bevorzugt 10 bis 20;
- m: ist eine Zahl von 1 bis 6, bevorzugt 2 bis 4, besonders bevorzugt 3;

mit der Maßgabe, dass $R^1$ ungleich H ist, wenn n=0.

Hierbei kann es sich bei dem Index n um einen Mittelwert handeln.

Im Sinne der vorliegenden Erfindung sind die genannten Reste wie folgt definiert:

Alkyl bezeichnet einen univalenten Rest bestehend aus einer linearen oder verzweigten Kohlenwasserstoffkette, insbesondere umfassend 1 bis 30 Kohlenstoffatome, bevorzugt 1 bis 20 Kohlenstoffatome. Beispielsweise kann es sich bei den Alkylresten um Methyl-, Ethyl-, n-Propyl- oder iso-Propyl-Reste handeln.

Aryl bezeichnet eine substituierte oder unsubstituierte aromatische Kohlenwasserstoff-Gruppe, insbesondere umfassend 6 bis 30, oftmals 6 bis 12, Kohlenstoffatome. Beispielsweise kann es sich bei dem Arylrest um eine Phenylgruppe handeln.

Arylalkyl bezeichnet einen univalenten Rest abgeleitet von einem linearen oder verzweigten Alkylrest, insbesondere umfassend 1 bis 24 Kohlenstoffatome, bevorzugt 2 bis 18 Kohlenstoffatome, besonders bevorzugt 2 bis 12 Kohlenstoffatome, durch den Austausch eines oder mehrerer Wasserstoffatome durch eine Arylgruppe, wobei die Arylgruppe eine substituierte oder unsubstituierte aromatische Kohlenwasserstoff-Gruppe, insbesondere umfassend 6 bis 29, oftmals 6 bis 12, Kohlenstoffatome, ist. Beispielsweise kann es sich bei der aromatischen Kohlenwasserstoff-Gruppe um Phenyl handeln. Beispielsweise kann es sich bei dem Arylalkyl-Rest um einen Benzyl-Rest handeln.

Insbesondere ist $R^1$ $C_1$-$C_{30}$-Alkyl, besonders bevorzugt $C_1$-$C_{20}$-Alkyl, beispielsweise ausgewählt aus Methyl, Ethyl, n-Propyl, iso-Propyl, n-Butyl, iso-Butyl, sec-Butyl, tert-Butyl, n-Pentyl, isoPentyl, sec-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl, n-Dodecyl, iso-Dodecyl, n-Tetradecyl, iso-Tetradecyl, n-Hexadecyl, iso-Hexadecyl, n-Octadecyl, iso-Octadecyl, n-Eicosyl und iso-Eicosyl. In einer bevorzugten Ausführungsform ist $R^1$ Methyl.

Beispielsweise kann es sich bei dem Rest $C_6$-$C_{30}$-Aryl um Phenyl, 1-Naphthyl, 2-Naphthyl, 1-Anthracenylen, 2-Anthracenylen oder 9-Anthracenylen handeln.

Beispielsweise kann es sich bei dem Rest $C_3$-$C_{10}$-Cycloalkyl um einen substituierten oder unsubstituierten cyclischen Rest handeln, insbesondere um Cyclopentyl, Cyclohexyl oder Cyclooctyl. Beispielsweise können ein oder

mehrere nicht benachbarte Kohlenstoffatome durch Sauerstoff, N-H oder N-$CH_3$ ersetzt sein, insbesondere kann es sich um 1,3-Dioxolanyl, 1,3-Dioxanyl, 1,3-Oxazolinyl, 2,2-Dimethyl- Dioxolanyl oder 2,2-Dimethyl- 1,3-Dioxanyl handeln.

Beispielsweise kann es sich bei der Gruppe $C_2$-$C_{20}$-Alkylen um eine Gruppe ausgewählt aus-$CH_2$-; -$CH(CH_3)$-; -$CH(C_2H_5)$-; -$C(CH_3)_2$-; -$CH_2$-$CH_2$-;-$CH(CH_3)$-$CH_2$-; -$CH_2$-$CH(CH_3)$-, -$CH(C_2H_5)$ -$CH_2$-; -$(CH_2)_3$-; -$(CH_2)_4$-; -$(CH_2)_5$-; -$(CH_2)_6$-; -$(CH_2)_8$- oder -$(CH_2)_{10}$- handeln. Bevorzugt handelt es sich um -$CH_2$-$CH_2$; -$CH(CH_3)$-$CH_2$- oder -$CH_2$-$CH(CH_3)$-, besonders bevorzugt um -$CH_2$-$CH_2$-.

Beispielsweise kann es sich bei der Gruppe $C_6$-$C_{10}$-Arylen um ortho-Phenylen, meta-Phenylen, para-Phenylen, 1,6-Naphthylen, 1,7-Naphthylen, 2,6-Naphthylen, 2,7-Naphthylen oder 1,8-Naphthylen handeln.

Beispielsweise kann es sich bei der Gruppe $C_7$-$C_{10}$-Arylalkylen um -CH ($C_6H_5$)- oder -$CH_2$-$CH(C_6H_5)$- handeln.

Bevorzugt handelt es sich bei dem hochverzweigten Polyether P um eine Verbindung gemäß der folgenden Formel (I), wobei die Reste und Indizes die folgenden Bedeutungen haben:

$R^1$: ist unabhängig voneinander H oder $C_1$-$C_{30}$-Alkyl, bevorzugt $C_1$-$C_{10}$-Alkyl, besonders bevorzugt Methyl;

$A^1$: ist unabhängig voneinander $C_2$-$C_{20}$-Alkylen, bevorzugt $C_2$-$C_{10}$-Alkylen, besonders bevorzugt -$CH_2$-$CH_2$-;

n: ist unabhängig voneinander eine Zahl von 0 bis 200, bevorzugt 1 bis 150, besonders bevorzugt 10 bis 20;

m: ist eine Zahl von 1 bis 6, bevorzugt 2 bis 4, besonders bevorzugt 3;

mit der Maßgabe, dass $R^1$ ungleich H ist, wenn n=0.

Bei dem mindestens einen hochverzweigten (dendritischen) Polyether P kann es sich auch um eine Verbindung handeln, welche mindestens 1, beispielsweise 1 bis 10 (Zahlenmittel), bevorzugt 1 bis 5, besonders bevorzugt 2 der folgenden Struktureinheiten aufweist, wobei die Reste und Indices die oben beschriebenen Bedeutungen haben:

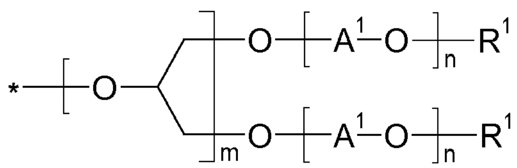

Hochverzweigte Polyether P (insbesondere Polyether-Dendronen) der Formel I können beispielsweise wie folgt aussehen, wobei n, $A^1$ und $R^1$ die oben definierte Bedeutung haben:

m=1

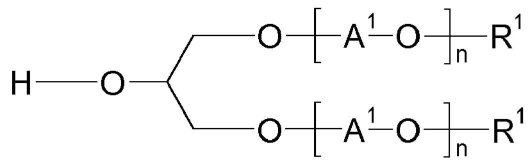

(II)

m=2

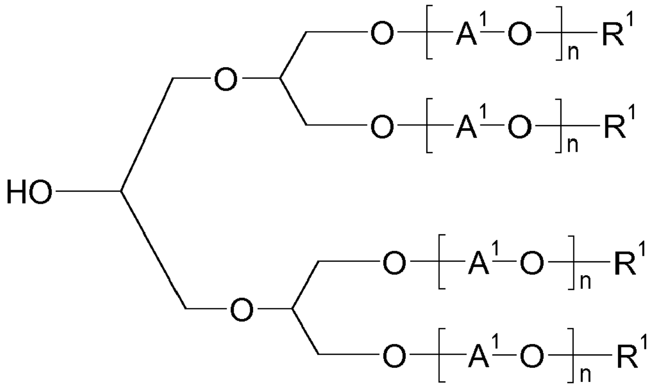

(III)

m=3

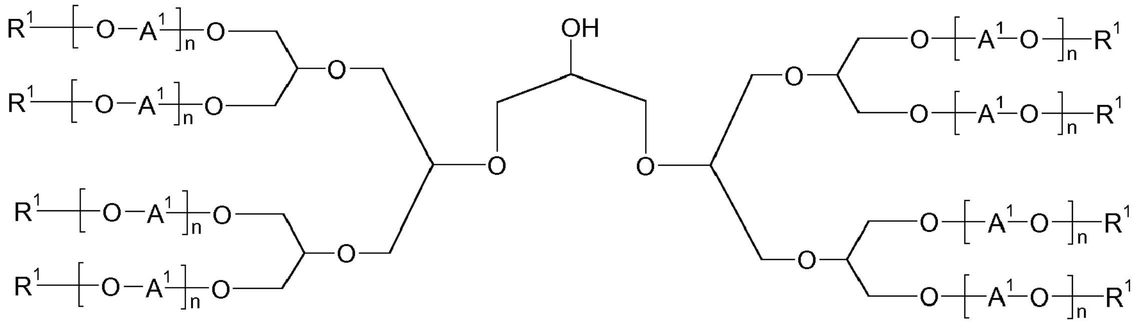

(IV).

Darüber hinaus können die oben beschriebenen Polyether P auch eine Verbindung gemäß Formel (V) enthalten:

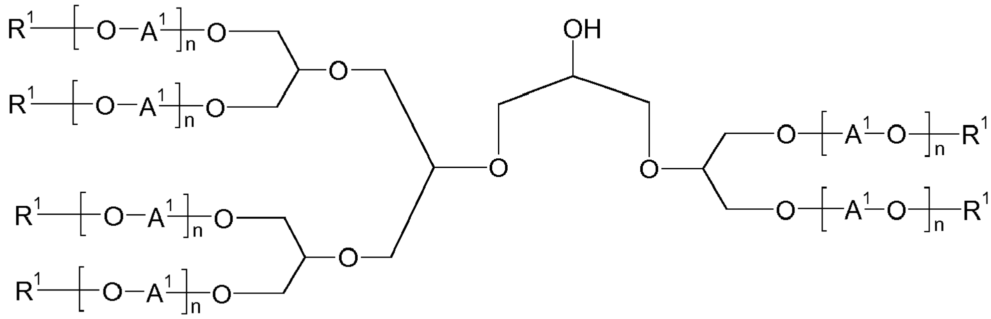

(V),

wobei die Reste und Indizes die oben beschriebenen Bedeutungen haben.

Die Verbindungen gemäß Formel (V) können insbesondere durch die unvollständige Umsetzung entstehen und stellen typischerweise eine Verunreinigung dar.

Der verzweigte (dendritische) Polyether P kann bevorzugt ein Dendron der Formeln (I) bis (V) oder Mischungen dieser Verbindungen darstellen. Weiterhin kann der verzweigte Polyether P in der Struktur eines Dendrimers oder eines hyperverzweigtes Polymers vorliegen umfassend die oben beschriebenen Strukturen gemäß Formel (I) bis (V).

In einer bevorzugten Ausführungsform handelt es sich bei dem hochverzweigten Polyether P um eine Verbindung der Formel (IV), wobei die Reste und Indizes die oben beschriebenen Bedeutungen haben.

Insbesondere handelt es sich bei dem hochverzweigten Polyether P um eine Verbindung der folgenden Formel (IV),

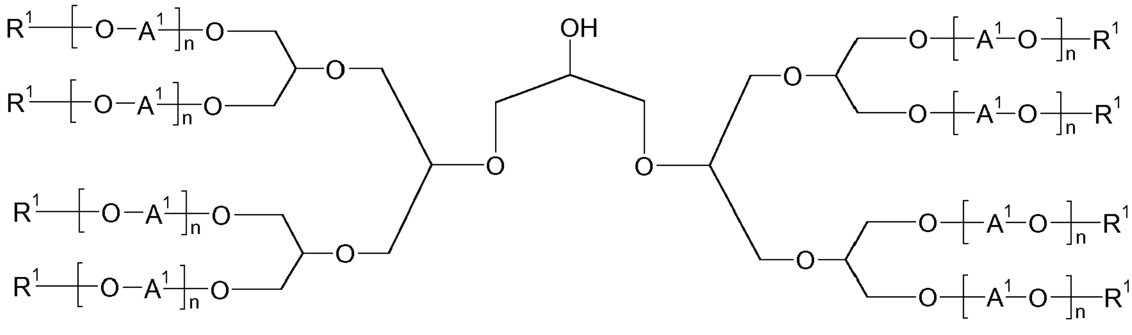

(IV),

wobei die Reste und Indizes die folgende Bedeutung haben:

$R^1$: ist unabhängig voneinander H oder $C_1$-$C_{30}$-Alkyl, bevorzugt $C_1$-$C_{10}$-Alkyl, besonders bevorzugt Methyl;

$A^1$: ist unabhängig voneinander $C_2$-$C_{20}$-Alkylen, bevorzugt $C_2$-$C_{10}$-Alkylen, besonders bevorzugt $-CH_2-CH_2-$;

n: ist unabhängig voneinander eine Zahl von 0 bis 200, bevorzugt 1 bis 150, besonders bevorzugt 10 bis 20.

Die Herstellung solcher hochverzweigter Polyether P ist beispielsweise in WO 2011/0015361 (insbesondere auf den Seiten 30 und 31) oder WO 2010/000713 beschrieben.

Zur Herstellung der Polyether-Dendronen P der Formeln (I) bis (V) setzt man typischerweise eine Verbindung der Formel $R^1$-OH mit Glycerin oder einem Glycerin-Derivat um. Dazu wählt man vorzugsweise ein Molverhältnis von Verbindung der allgemeinen Formel $R^1$-OH zu reaktivem Derivat von Glycerin, insbesondere Epichlorhydrin, wie 2 : 1.

Die Herstellung kann man beispielsweise bei Temperaturen im Bereich von 20 bis 200 °C durchführen, bevorzugt bei 80 bis 130 °C.

Die Herstellung kann man in Gegenwart mindestens eines Katalysators durchführen. Geeignete Katalysatoren sind beispielsweise anorganische und/oder organische Basen. Setzt man Epichlorhydrin als reaktives Glycerinderivat ein, so dient die Base in der Regel nicht nur als Katalysator, sondern auch zum Neutralisieren der entstehenden Salzsäure. Geeignete anorganische Basen sind beispielsweise Alkalimetallcarbonate und insbesondere Alkalimetallhydroxide wie NaOH und KOH. Geeignete organische Basen sind beispielsweise tertiäre Amine, insbesondere Triethylamin und [2,2,2] Diazabicyclooctan (DABCO), sowie Pyridin und para-N,N-Dimethylaminopyridin. Die Reaktion wird oftmals in einem Lösungsmittel durchgeführt. Geeignete Lösungsmittel sind beispielsweise Ether, insbesondere 1,4-Dioxan, Diisopropylether, Tetrahydrofuran (THF) und Di-n-butylether. Weitere geeignete Lösungsmittel sind n-Butylacetat, Aceton, Dimethylsulfoxid (DMSO), N,N-Dimethylformamid (DMF) und N-Methylpyrrolidon, Kohlenwasserstoffe, beispielsweise Cyclohexan und aromatische Lösungsmittel, wie beispielsweise Toluol.

Oftmals wird bei der Herstellung der hochverzweigten Polyether P das gebildete Wasser durch ein oder mehrere Wasser-entziehende Mittel und/oder durch azeotrope Destillation entfernt. Als Wasser-entziehende Mittel können beispielsweise Molekularsieb, Natriumsulfat und/oder Magnesiumsulfat eingesetzt werden.

Oftmals wird die Herstellung der hochverzweigten Polyether P stufenweise durchgeführt, und zwar in so vielen Stufen, wie sie dem gewünschten m in Formel (I) entspricht. Dabei wird oftmals ein reaktives Derivat von Glycerin, insbesondere Epichlorhydrin, in der betreffenden Zahl an Stufen zugesetzt. Zur stufenweisen Umsetzung kann man beispielsweise so vorgehen, dass man zunächst eine bestimmte Menge an Verbindung der allgemeinen Formel $R^1$-OH mit der halben Molzahl an Glycerin oder vorzugsweise mit einem reaktiven Derivat von Glycerin, insbesondere mit Epichlorhydrin, umsetzt. Danach gibt man typischerweise eine Menge an Glycerin oder an reaktivem Derivat von Glycerin zu, die einem Viertel der Molzahl von Verbindung der allgemeinen Formel $R^1$-OH entspricht, und setzt um. Wünscht man eine weitere Stufe durchzuführen, so kann man danach eine Menge an Glycerin oder an reaktivem Derivat von Glycerin zu geben, die einem Achtel der Molzahl an Verbindung der allgemeinen Formel $R^1$-OH entspricht, und umsetzen. Bei jeder weiteren Stufe reduziert man die zugesetzte Molzahl an Verbindung der allgemeinen Formel $R^1$-OH entsprechend.

Typischerweise enthält die Polymer-Rohlösung R als organisches Lösungsmittel L ein Lösungsmittel, das bei der Herstellung der hochverzweigten Polyether P gängigerweise eingesetzt wird. Bei dem organischen Lösungsmittel L kann es sich beispielsweise um Ether (insbesondere 1,4-Dioxan, Diisopropylether, Tetrahydrofuran (THF) oder Di-n-butylether), n-Butylacetat, Aceton, Dimethylsulfoxid (DMSO), N,N-Dimethylformamid (DMF), N-Methylpyrrolidon, Kohlenwasserstoffe (beispielsweise Cyclohexan) oder aromatische Lösungsmittel (wie beispielsweise Toluol) oder Mischungen hiervon handeln.

Bevorzugt betrifft die Erfindung ein oben beschriebenes Verfahren, wobei das mindestens eine Lösungsmittel L ausgewählt ist aus Ethern, n-Butylacetat, Aceton, Dimethylsulfoxid (DMSO), N,N-Dimethylformamid (DMF), N-Methylpyrrolidon, Kohlenwasserstoffen (beispielsweise Cyclohexan) und aromatische Lösungsmittel (wie beispielsweise Toluol). Bevorzugt ist das mindestens eine organische Lösungsmittel L ein aromatisches Lösungsmittel, insbesondere Toluol. Auch können Mischungen der genannten Lösungsmittel eingesetzt werden.

Bevorzugt betrifft die Erfindung ein oben beschriebenes Verfahren, wobei das mindestens eine kosmotrope Salz K ein Anion umfasst, ausgewählt aus der Gruppe bestehend aus Citrat ($^-OOH-CH_2-C(OH)(COO^-)-CH_2-COO^-$), Sulfat ($SO_4^{2-}$), Dihydrogenphosphat ($H_2PO_4^-$), Acetat ($CH_3COO^-$), Chlorid ($Cl^-$), Bromid (Br), Iodid ($I^-$) und Nitrat ($NO_3^-$). Bevorzugt umfasst das kosmotrope Salz ein Anion ausgewählt aus der Gruppe bestehend aus Citrat ($^-OOC-CH_2-C(OH)(COO^-)-CH_2-COO^-$), Sulfat ($SO_4^{2-}$), Dihydrogenphosphat ($H_2PO_4^-$), Acetat ($CH_3COO^-$), besonders bevorzugt aus Citrat ($^-OOC-CH_2-C(OH)(COO^-)-CH_2-COO^-$) und Sulfat ($SO_4^{2-}$).

Bevorzugt betrifft die Erfindung ein oben beschriebenes Verfahren, wobei das mindestens eine kosmotrope Salz K ein Kation umfasst, ausgewählt aus der Gruppe bestehend aus Ammonium ($NH_4^+$), Kalium ($K^+$), Natrium ($Na^+$), Caesium ($Cs^+$) und Lithium ($Li^+$). Bevorzugt umfasst das kosmotrope Salz K ein Kation, ausgewählt aus der Gruppe bestehend aus Ammonium ($NH_4^+$), Kalium ($K^+$), Natrium ($Na^+$), besonders bevorzugt aus Ammonium ($NH_4^+$) und Kalium ($K^+$).

Insbesondere haben sich als kosmotrope Anionen Sulfationen ($SO_4^{2-}$) und Citrationen ($^-OOC-CH_2-C(OH)(COO^-)-CH_2-COO^-$) als geeignet erwiesen, als besonders geeignete kosmotrope Kationen haben sich Ammoniumionen ($NH_4^+$) und Kaliumionen ($K^+$) erwiesen.

In einer bevorzugten Ausführungsform kann als kosmotropes Salz K eine Mischung von mindestens zwei kosmotropen Salzen eingesetzt werden. Insbesondere kann die wässrige Salzlösung S eine Mischung von mindestens zwei der beschriebenen Anionen und/oder mindestens zwei der oben beschriebenen Kationen, enthalten. Insbesondere kann als wässrige Salzlösung S eine Mischung einer Ammoniumsulfat-Lösung ($(NH_4)_2(SO_4)$) und einer Kaliumcitratlösung ($K_3C_6H_5O_7$) eingesetzt werden.

Typischerweise weist die wässrige Salzlösung S eine Konzentration an kosmotropen Salz K im Bereich von 0,1 bis 10 mol/l, bevorzugt von 0,5 bis 10 mol/l, insbesondere bevorzugt von 1 bis 6 mol/l, insbesondere bevorzugt von 1 bis 4 mol/l, insbesondere bevorzugt von 2 bis 5 mol/l, auf. Die wässrige Salzlösung S kann gegebenenfalls weitere Komponenten enthalten, z.B. polare Lösungsmittel (wie Alkohole, Glycerin) und/oder weitere Salze (wie Alkali-und Erdalkalimetall-hydroxide, Alkali-und Erdalkalimetallhalogenide).

Bevorzugt betrifft die Erfindung ein oben beschriebenes Verfahren, wobei als mindestens eine Salzlösung S eine Ammoniumsulfat-Lösung ($(NH_4)_2(SO_4)$), eine Kaliumcitratlösung ($K_3C_6H_5O_7$) oder eine Mischung hiervon eingesetzt wird.

Bevorzugt wird als mindestens eine Salzlösung S eine Ammoniumsulfat-Lösung ($(NH_4)_2(SO_4)$) mit einer Konzentration im Bereich von 1 bis 3 mol/l, bevorzugt im Bereich von 2 bis 3,5 mol/l, oder eine Kaliumcitrat-Lösung ($K_3C_6H_5O_7$) mit einer Konzentration im Bereich von 3 bis 5 mol/l, bevorzugt im Bereich von 3,5 bis 4,5 mol/l, eingesetzt.

Bevorzugt liegt das Gewichtsverhältnis der eingesetzten Salzlösung S zu der eingesetzten Polymer-Rohlösung R im Bereich von 1:10 bis 10:1, bevorzugt 1:4 bis 2:1, besonders bevorzugt 1:2 bis 1:1.

Das Inkontaktbringen kann durch eine dem Fachmann bekannte, übliche Maßnahme der Flüssig-Flüssig-Extraktion erfolgen. Beispielsweise kann das Inkontaktbringen, typischerweise im Labormaßstab, in einem einstufigen Verfahren, z.B. in einem Schütteltrichter erfolgen. Grundsätzlich kann das Inkontaktbringen auch in einem großtechnischen und/oder kontinuierlichen Verfahren der Flüssig-Flüssig-Extraktion durchgeführt werden, z.B. in einer dem Fachmann bekannten Vorrichtung der Flüssig-Flüssig-Extraktion, z.B. in einem Rührkessel, in einer Bodenkolonne (z.B. Siebbodenkolonne) oder Füllkörperkolonne.

Weiterhin ist es möglich, die mindestens eine Salzlösung S nach der Trennung der Phasen in Schritt b) mehrmals zu verwenden, d.h. die in Schritt b) abgetrennte wässrige Phase noch mindestens ein weiteres Mal als Salzlösung S einzusetzen. Bevorzugt betrifft die Erfindung ein oben beschriebenes Verfahren, wobei sich in Schritt a) mindestens eine wässrige Phase bildet, und die in Schritt b) abgetrennte wässrige Phase mindestens ein weiteres Mal als Salzlösung S eingesetzt wird, und die Schritte a und b mindestens zweimal (bevorzugt zwei bis viermal) durchlaufen werden.

Es ist auch möglich die Schritte a) und b) mehrmals zu durchlaufen und dabei die abgetrennte organische Phase oder Polymerphase mit jeweils frischer Salzlösung S in Kontakt zu bringen. Dabei kann es sich um die gleiche Salzlösung S wie in den vorherigen Schritten handeln, es kann jedoch auch eine andere Salzlösung S eingesetzt werden.

Typischerweise weist die bei dem oben beschriebene Verfahren verwendete Salzlösung S einen pH Wert im Bereich von 4 bis 8; bevorzugt 5 bis 7 auf. Typischerweise wird das oben beschriebene Verfahren, insbesondere zumindest Schritt a), bei einer Temperatur im Bereich von 1 bis 100 °C, bevorzugt 10 bis 80 °C; insbesondere bevorzugt 15 bis 50 °C durchgeführt.

In einer bevorzugten Ausführungsform betrifft die Erfindung ein oben beschriebenes Verfahren zum Aufreinigen einer Polymer-Rohlösung R, wobei es sich bei der mindestens einen Salzlösung S um eine Ammoniumsulfat-Lösung handelt und wobei sich in Schritt a) eine wässrige Phase, eine organische Phase und eine Polymerphase (polymerreiche

Phase) bilden, und wobei der hochverzweigte Polyether P in der Polymerphase enthalten ist. Bevorzugt sind das kosmotrope Salz K und/oder der basische Katalysator B in der wässrigen Phase enthalten. In dieser Ausführungsform kann das gewünschte polymere Produkt (hochverzweigter Polyether P) aus der Polymerphase isoliert werden, die störenden Salze, insbesondere die Salze des basischen Katalysators B (z.B. NaOH und NaCl) befinden sich in der wässrigen Phase. Insbesondere sind nach Schritt a) mindestens 90 Gew.-%, bevorzugt mindestens 95 Gew.-%, besonders bevorzugt mindestens 99 Gew.-% des hochverzweigten Polyethers P in der Polymerphase enthalten, bezogen auf die Gesamtmenge des in der ursprünglichen Polymer-Rohlösung R enthaltenen hochverzweigten Polyethers P. Analoges gilt für das kosmotrope Salz K und/oder den basische Katalysator B in der wässrigen Phase. Insbesondere wird in dieser Ausführungsform eine Ammoniumsulfat-Lösung ($(NH_4)_2(SO_4)$) mit einer Konzentration im Bereich von 1 bis 3 mol/l, bevorzugt im Bereich von 2 bis 3,5 mol/l eingesetzt. In dieser Ausführungsform wird insbesondere eine Polymer-Rohlösung R, enthaltend mindestens einen hochverzweigten Polyether P gemäß der oben beschriebenen Formel (IV) und mindestens ein organisches Lösungsmittel L, ausgewählt aus aromatischen Lösungsmitteln (bevorzugt Toluol), eingesetzt.

In einer bevorzugten Ausführungsform betrifft die Erfindung ein oben beschriebenes Verfahren zum Aufreinigen einer Polymer-Rohlösung R, wobei es sich bei der Salzlösung S um eine Kaliumcitrat-Lösung ($K_3C_6H_5O_7$) handelt und wobei sich in Schritt a) eine wässrige Phase und eine organische Phase bilden, wobei der hochverzweigte Polyether P in der organischen Phase enthalten ist. Bevorzugt sind das kosmotrope Salz K und/oder der basische Katalysator B in der wässrigen Phase enthalten. Insbesondere sind nach Schritt a) mindestens 90 Gew.-%, bevorzugt mindestens 95 Gew.-%, besonders bevorzugt mindestens 99 Gew.-% des hochverzweigten Polyethers P in der organischen Phase enthalten, bezogen auf die Gesamtmenge des in der ursprünglichen Polymer-Rohlösung R enthaltenen hochverzweigten Polyethers P. Analoges gilt für das kosmotrope Salz K und/oder den basische Katalysator B in der wässrigen Phase. In dieser Ausführungsform kann das gewünschte polymere Produkt (hochverzweigter Polyether P) aus der organischen Phase isoliert werden, die störenden Salze (z.B. NaOH und NaCl) befinden sich insbesondere in der wässrigen Phase. Insbesondere wird in dieser Ausführungsform als Salzlösung S eine Kaliumcitrat-Lösung ($K_3C_6H_5O_7$) mit einer Konzentration größer oder gleich 3 mol/l, bevorzugt mit einer Konzentration im Bereich von 3 bis 5 mol/l, bevorzugt im Bereich von 3,5 bis 4,5 mol/l, eingesetzt. In dieser Ausführungsform wird insbesondere eine Polymer-Rohlösung R, enthaltend mindestens einen hochverzweigten Polyether P gemäß der oben beschriebenen Formel (IV) und mindestens ein organisches Lösungsmittel L, ausgewählt aus aromatischen Lösungsmitteln (bevorzugt Toluol), eingesetzt.

In einer weiteren Ausführungsform betrifft die Erfindung ein oben beschriebenes Verfahren zum Aufreinigen einer Polymer-Rohlösung R, wobei es sich bei der Salzlösung S um eine Kaliumcitrat-Lösung ($K_3C_6H_5O_7$) handelt und wobei sich in Schritt a) eine wässrige Phase, eine organische Phase und eine Polymerphase (polymerreiche Phase) bilden, und wobei der hochverzweigte Polyether P in der Polymerphase und/oder der organischen Phase enthalten ist. Bevorzugt sind das kosmotrope Salz K und/oder der basische Katalysator B in der wässrigen Phase enthalten. Insbesondere sind nach Schritt a) mindestens 90 Gew.-%, bevorzugt mindestens 95 Gew.-%, besonders bevorzugt mindestens 99 Gew.-% des hochverzweigten Polyethers P in der organischen Phase und/oder der Polymerphase enthalten, bezogen auf die Gesamtmenge des in der ursprünglichen Polymer-Rohlösung R enthaltenen hochverzweigten Polyethers P. Analoges gilt für das kosmotrope Salz K und/oder den basische Katalysator B in der wässrigen Phase. In dieser Ausführungsform kann das gewünschte polymere Produkt (hochverzweigter Polyether P) aus der organischen Phase und/oder der Polymerphase isoliert werden, die störenden Salze (z.B. NaOH und NaCl) befinden sich insbesondere in der wässrigen Phase. Insbesondere wird in dieser Ausführungsform eine Kaliumcitrat-Lösung ($K_3C_6H_5O_7$) mit einer Konzentration im Bereich von kleiner gleich 3 mol/l, bevorzugt von kleiner 3 mol/l, bevorzugt mit einer Konzentration im Bereich von 0,1 bis 3 mol/l, bevorzugt im Bereich von 0,5 bis 2,9 mol/l, besonders bevorzugt im Bereich von 1 bis 2,5 mol/l eingesetzt. In dieser Ausführungsform wird insbesondere eine Polymer-Rohlösung R, enthaltend mindestens einen hochverzweigten Polyether P gemäß der oben beschriebenen Formel (IV) und mindestens ein organisches Lösungsmittel L, ausgewählt aus aromatischen Lösungsmitteln (bevorzugt Toluol), eingesetzt.

Weiterhin betrifft die vorliegende Erfindung die Verwendung einer Salzlösung S, enthaltend mindestens ein kosmotropes Salz K, zur Extraktion einer Polymer-Rohlösung R, enthaltend mindestens einen hochverzweigten Polyether P und mindestens ein organisches Lösungsmittel L.

Für die erfindungsgemäße Verwendung gelten die oben im Zusammenhang mit dem erfindungsgemäßen Verfahren beschriebenen bevorzugten Ausführungsformen, z.B. betreffend die Salzlösung S, die Polymer-Rohlösung R, den hochverzweigten Polyether P, das kosmotrope Salz K, das organische Lösungsmittel L und den basischen Katalysator B, in entsprechender Weise.

Bevorzugt betrifft die Erfindung die oben beschriebene Verwendung einer Salzlösung S, wobei die Salzlösung S zwei oder mehrere der oben beschriebenen (im Zusammenhang mit dem erfindungsgemäßen Verfahren) kosmotropen Salze K enthält.

Bevorzugt betrifft die Erfindung die Verwendung einer Salzlösung S, enthaltend mindestens ein kosmotropes Salz K, zur Extraktion einer Polymer-Rohlösung R, wobei es sich bei der Salzlösung S um Ammoniumsulfat-Lösung, Kaliumcitrat-Lösung oder eine Mischung hiervon handelt.

Figur 1 zeigt die Phasenausbildung bei der Extraktion mit Ammoniumsulfat-Lösung. Die obere Phase P1 stellt die organische Phase dar, die mittlere Phase P2 stellt die Polymerphase dar und die untere Phase P3 stellt die wässrige Phase dar.

Figur 2 zeigt die Phasenausbildung bei der Extraktion mit Kaliumcitat-Lösung. Die obere Phase P1 stellt die organische Phase dar, die untere Phase P2 stellt die wässrige Phase dar.

Die folgenden Beispiele sollen die Erfindung näher erläutern.

Beispiele

Die verwendete Polymer-Rohlösung R hatte die folgende Zusammensetzung

| | |
|---|---|
| 0,7 Gew.-% | NaOH |
| 1,9 Gew.-% | NaCl |
| 34,4 Gew.-% | hochverzweigter Polyether P |
| 63 Gew.-% | Toluol. |

Bei dem hochverzweigten Polyether handelt es sich um einen Polyether der 3. Generation erhältlich durch ein Verfahren wie in WO 2011/006838 in Beispiel I.4 auf den Seiten 30 und 31 beschrieben.

Es wurden GPC Messungen und $^1$H-NMR Messungen des Polyethers vor und nach den Extraktionen durchgeführt. Es zeigte sich keine Veränderung des Polyethers P durch die Extraktionen. Es konnte kein Glycerin in der Polymer-Rohlösung nachgewiesen werden.

Der Gehalt an Chlorid- und Sulfationen in der Polymerphase (im Falle der Extraktion mit Ammoniumsulfat-Lösung) oder der organischen Phase (im Falle der Extraktion mit Kaliumcitrat-Lösung) wurde nasschemisch (Nachweis als Silberchlorid und Bariumsulfat) quantitativ bestimmt. Der Gehalt an Polymer in der organischen Phase bzw. in der Polymerphase wurde gravimetrisch bestimmt.

Beispiel 1: Extraktion mit Wasser (Vergleichsbeispiel)

Als Vergleichsbeispiel wurde eine Extraktion der Polymer-Rohlösung mit Wasser und verschiedenen anderen Extraktionslösungen (Methanol/Wasser; Ethanol/Wasser, Isopropanol/Wasser) durchgeführt. Dazu wurden je 50 g Polymer-Rohlösung mit verschiedenen Salzlösungen in einem Schütteltrichter vermischt und geschüttelt. Nach der Phasentrennung wurde das Polymer in der wässrigen und der organischen (Toluol-Phase) Phase bestimmt. Es zeigte sich, dass das zu isolierende Polymer (Polyether P) sowohl in der organischen Phase (Toluol-Phase) als auch in der wässrigen Phase zu finden war und somit eine Trennung von Salzfracht und Polymer nicht möglich war.

Beispiel 2: Extraktion mit Ammoniumsulfat-Lösung

Es wurden jeweils 100 g der oben beschriebenen Polymer-Rohlösung R mit unterschiedlichen Ammoniumsulfat-Lösungen ($(NH_4)_2SO_4$) in einem Schütteltrichter extrahiert. Menge und Konzentration der Ammoniumsulfat-Lösungen wurden variiert und es wurde die mehrfache Verwendung der Ammoniumsulfat-Lösung untersucht (siehe Beispiel 4).

Es zeigte sich, dass sich bei der Extraktion der Polymer-Rohlösung mit Ammoniumsulfat-Lösung die folgenden drei Phasen bildeten: eine wässrige Phase (untere Phase), eine Polymerphase (polymerreiche wässrige Phase) (mittlere Phase) und eine organische Phase (obere Phase). Dies ist in Figur 1 dargestellt.

In der folgenden Tabelle 1 sind die Ergebnisse zur Extraktion von 100 g Polymer-Rohlösung mit verschiedenen Ammoniumsulfat-Lösungen zusammengestellt, wobei der berechnete Polymerverlust (in Gew.-%), die Reduktion (in Gew.-%) an NaCl und NaOH nach der Extraktion in Bezug auf die eingesetzte Polymer-Rohlösung R und der Gehalt an $(NH_4)_2SO_4$ in der Polymerphase angegeben sind:

Tabelle 1: Ergebnisse zur Extraktion mit Ammoniumsulfat-Lösungen

| Konz. $(NH_4)_2SO_4$-Lösung | Vol. $(NH_4)_2SO_4$-Lösung | NaCl-Red. | NaOH-Red. | $(NH_4)_2SO_4$ in der Polymerphase | Polymerverlust |
|---|---|---|---|---|---|
| [mol/l] | [ml] | [%] | [%] | [g] | [%] |
| 1,75 | 100 | 62 | 60 | 1,25 | 7,0 |
| 2,00 | 100 | 65 | 61 | 0,88 | 6,0 |

(fortgesetzt)

| Konz. $(NH_4)_2SO_4$-Lösung | Vol. $(NH_4)_2SO_4$-Lösung | NaCl-Red. | NaOH-Red. | $(NH_4)_2SO_4$ in der Polymer-phase | Polymerverlust |
|---|---|---|---|---|---|
| 2,25 | 100 | 89 | 73 | 0,79 | 0,5 |
| | 70 | 64 | 67 | 1,16 | 4,0 |
| | 50 | 59 | 51 | 1,49 | 10,0 |
| | 30 | 53 | 43 | 0,91 | 23,0 |
| 2,50 | 100 | 69 | 73 | 0,59 | 1,0 |
| | 70 | 59 | 60 | 1,23 | 12,0 |
| | 50 | 47 | 50 | 1,24 | 16,0 |
| | 30 | 42 | 47 | 1,54 | 28,0 |
| 2,75 | 100 | 64 | 77 | 0,30 | 2,0 |
| 3,00 | 100 | 64 | 97 | 0,31 | 1,0 |
| | 70 | 52 | 70 | 0,79 | 18,0 |
| | 50 | 52 | 59 | 0,66 | 26,0 |
| | 30 | 51 | 56 | 1,19 | 35,0 |

Bei hohen Konzentrationen ab 2.25 M ergibt sich ein deutlich geringerer Polymerverlust im Vergleich zu niedriger konzentrierten Ammoniumsulfat-Lösungen. Es hat sich gezeigt, dass mittels einer Extraktion mit 100 ml einer 2,25 M Ammoniumsulfat-Lösung der geringste Verlust an Polymer erzielt werden kann (0,5 % Polymerverlust). Daneben zeigte sich, dass mit Extraktion mit einer 3M Ammoniumsulfat-Lösung der geringste Salzgehalt in der Polymerphase erreicht werden kann.

Beispiel 3: Extraktion mit Kaliumcitrat-Lösung

Es wurden jeweils 100 g der oben beschriebenen Polymer-Rohlösung mit unterschiedlichen Kaliumcitrat-Lösungen ($K_3C_6H_5O_7$ $H_2O$) in einem Schütteltrichter extrahiert. Menge und Konzentration der Kaliumcitrat-Lösung wurden variiert.

Es zeigte sich, dass bei der Extraktion der Polymer-Rohlösung mit Kaliumcitrat-Lösung mit einer Konzentration größer 3M die folgenden zwei Phasen gebildet wurden: eine wässrige Phase (untere Phase) und eine organische Phase (obere Phase), wobei das Polymer größtenteils in der organischen Phase vorhanden war. Dies ist in Figur 2 dargestellt.

Setzt man Kaliumcitrat-Lösungen mit Konzentrationen kleiner 3 M ein, so erhält man ähnlich wie im Falle der Ammoniumsulfat-Lösungen drei Phasen, wobei das Polymer überwiegend in der mittleren wässrigen Phase vorhanden ist.

In der folgenden Tabelle 2 sind die Ergebnisse zur Extraktion von 100 g Polymer-Rohlösung mit verschiedenen Kaliumcitrat-Lösungen zusammengestellt, wobei der berechnete Polymerverlust (in Gew.-%) und die Reduktion (in Gew.-%) an NaCl und NaOH nach der Extraktion in Bezug auf die eingesetzte Polymer-Rohlösung und der Gehalt an Kaliumcitrat in der organischen Phase angegeben sind:

Tabelle 2: Ergebnisse zur Extraktion mit Kaliumcitrat-Lösungen

| Konz. Kalium-citrat-Lösung | Vol. Kalium-citrat-Lösung | NaCl-Red. | NaOH-Red. | Kaliumcitrat in der org. Phase | Polymerverlust |
|---|---|---|---|---|---|
| [mol/l] | [ml] | [%] | [%] | [mg] | [%] |
| 3,50 | 100 | > 99 | > 86 | 25 | 0,5 |
| 3,75 | 100 | > 99 | > 86 | 32 | 1,0 |

(fortgesetzt)

| Konz. Kalium-citrat-Lösung | Vol. Kalium-citrat-Lösung | NaCl-Red. | NaOH-Red. | Kaliumcitrat in der org. Phase | Polymerverlust |
|---|---|---|---|---|---|
| [mol/l] | [ml] | [%] | [%] | [mg] | [%] |
| 4,0 | 100 | > 99 | > 86 | 36 | 0,2 |
| | 70 | > 99 | > 86 | 56 | 1,4 |
| | 50 | 94 | > 86 | 80 | 1,4 |
| | 30 | 83 | > 86 | 149 | 2,9 |
| 4,25 | 100 | > 99 | > 86 | 40 | 0,4 |
| 4,5 | 100 | > 99 | > 86 | 52 | 0,8 |
| 4,75 | 100 | > 99 | > 86 | 58 | 3,7 |
| 5,0 | 100 | > 99 | > 86 | 65 | 1,2 |
| | 70 | > 99 | > 86 | 72 | 1,8 |
| | 50 | 91 | > 86 | 142 | 0,8 |
| | 30 | 89 | > 86 | 178 | 1,2 |

Es zeigte sich, dass das Natriumchlorid durch die Extraktion mit Kaliumcitrat-Lösung fast vollständig aus der organischen Phase entfernt werden konnte, wobei der Verlust an Polymer gering war.

Besonders vorteilhafte Ergebnisse konnten beispielsweise mit 100 ml einer 3,5 M Kaliumcitrat-Lösung erzielt werden.

Beispiel 4: Extraktion mit Kaliumcitrat-Lösung bei mehrmaliger Verwendung der Extraktionslösung

Es wurden Versuche durchgeführt, wobei die Kaliumcitrat-Lösung mehrfach verwendet wurde. Dazu wurde die abgetrennte Kaliumcitrat-Lösung erneut mit 100 g der Polymer-Rohlösung R versetzt. Es wurden je 100 ml einer 4 M und einer 5 M Kaliumcitrat-Lösung eingesetzt.

In der folgenden Tabelle 3 sind die Ergebnisse zur Extraktion von 100 g Polymer-Rohlösung mit Kaliumcitrat-Lösungen unter mehrmaliger Verwendung der Extraktionslösung zusammengestellt, wobei der berechnete Polymerverlust (in Gew.-%), die Reduktion (in Gew.-%) an NaCl und NaOH nach den Extraktionszyklen in Bezug auf die eingesetzte Polymer-Rohlösung und der Gehalt an Kaliumcitrat in der organischen Phase angegeben sind:

Tabelle 3: Ergebnisse zur Extraktion unter mehrmaliger Verwendung der Kaliumcitrat-Extraktionslösung

| Konz. Kaliumcitrat-Lösung | Anzahl Extraktionszyklen | NaCl-Red. | NaOH-Red. | Kaliumcitrat in der org. Phase | Polymerverlust |
|---|---|---|---|---|---|
| [mol/l] | - | [%] | [%] | [mg] | [%] |
| 4 | 1 | > 99 | > 86 | 36 | 0,2 |
| | 2 | 93 | > 86 | 69 | 3,9 |
| | 3 | 91 | > 86 | 86 | 2,1 |
| 5 | 1 | > 99 | > 86 | 65 | 1,2 |
| | 2 | 98 | > 86 | 137 | 2,3 |
| | 3 | 97 | > 86 | 236 | 1,9 |

Beispiel 5: Extraktion mit Kaliumcitrat-Lösung bei mehrmaliger Extraktion

Es wurden Versuche zur mehrfachen Extraktion mit kleinen Volumen an frischer 4 M Kaliumcitrat-Lösung durchgeführt. Es erfolgte die Extraktion von 100 g Polymer-Rohlösung R dreimal mit 30 ml und dreimal mit 50 ml jeweils frischer 4 M Kaliumcitrat-Lösung.

In der folgenden Tabelle 4 sind die Ergebnisse zur Extraktion von 100 g Polymer-Rohlösung mit 4 M Kaliumcitrat-Lösungen bei mehrmaliger Extraktion mit frischer Extraktionslösung zusammengestellt, wobei der berechnete Polymerverlust (in Gew-%), die Reduktion (in Gew.-%) an NaCl und NaOH nach den Extraktionsschritten in Bezug auf die eingesetzte Polymer-Rohlösung und der Gehalt an Kaliumcitrat in der organischen Phase angegeben sind:

Tabelle 4: Ergebnisse zur mehrmaliger Extraktion mit Kaliumcitrat-Lösung

| Volumen Kaliumcitrat-Lösung | Anzahl Extraktions-schritte | NaCl-Red. | NaOH-Red. | Kaliumcitrat in der org. Phase | Polymerverlust |
|---|---|---|---|---|---|
| [ml] | - | [%] | [%] | [mg] | [%] |
| 30 | 1 | 83 | > 86 | 149 | 2,9 |
| | 2 | > 99 | > 86 | 8 | 3,8 |
| | 3 | > 99 | > 86 | 7 | 4,3 |
| 50 | 1 | 93 | > 86 | 80 | 1,4 |
| | 2 | > 99 | > 86 | 9 | 3,1 |
| | 3 | > 99 | > 86 | 7 | 4,6 |

**Patentansprüche**

1. Verfahren zum Aufreinigen einer Polymer-Rohlösung R, enthaltend mindestens einen hochverzweigten Polyether P und mindestens ein organisches Lösungsmittel L, umfassend die Schritte

   a) in Kontakt bringen der Polymer-Rohlösung R mit mindestens einer wässrigen Salzlösung S, welche mindestens ein kosmotropes Salz K enthält, wobei sich mindestens zwei Phasen ausbilden; wobei die mindestens zwei Phasen ausgewählt sind aus einer wässrigen Phase, einer organischen Phase und/oder einer Polymerphase;
   b) Trennen der mindestens zwei Phasen.

2. Verfahren gemäß Anspruch 1, wobei die Polymer-Rohlösung R, neben dem hochverzweigten Polyether P und dem organischen Lösungsmittel L, mindestens einen basischen Katalysator B enthält, und wobei die folgenden Schritte umfasst sind:

   a) in Kontakt bringen der Polymer-Rohlösung R mit mindestens einer wässrigen Salzlösung S, welche mindestens ein kosmotropes Salz K enthält, wobei sich mindestens zwei Phasen ausbilden; wobei die mindestens zwei Phasen ausgewählt sind aus einer wässrigen Phase, einer organischen Phase und/oder einer Polymerphase;
   wobei der hochverzweigte Polyether P in der organischen Phase und/oder Polymerphase enthalten ist, und wobei das kosmotrope Salz K und/oder der basische Katalysator B in der wässrigen Phase enthalten sind,
   b) Trennen der mindestens zwei Phasen.

3. Verfahren gemäß einem der Ansprüche 1 oder 2, wobei der folgende zusätzliche Schritt umfasst ist:

   c) Isolieren des mindestens einen hochverzweigten Polyethers P aus einer der abgetrennten Phasen.

4. Verfahren gemäß einem der Ansprüche 1 bis 3, wobei es sich bei dem hochverzweigten Polyether P um eine Verbindung gemäß der folgenden Formel (I) handelt:

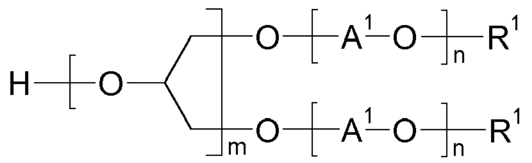

(I)

wobei die Reste und Indizes die folgenden Bedeutungen haben:

$R^1$: ist unabhängig voneinander H, $C_1$-$C_{30}$-Alkyl, $C_3$-$C_{10}$-Cycloalkyl, $C_6$-$C_{30}$-Aryl, $C_7$-$C_{30}$-Arylalkyl,
$A^1$: ist unabhängig voneinander $C_2$-$C_{20}$-Alkylen, $C_6$-$C_{10}$-Arylen oder $C_7$-$C_{10}$-Arylalkylen;
n: ist unabhängig voneinander eine Zahl von 0 bis 200,
m: ist eine Zahl von 1 bis 6,

mit der Maßgabe, dass $R^1$ ungleich H ist, wenn n=0.

**5.** Verfahren gemäß einem der Ansprüche 1 bis 4, wobei das mindestens eine Lösungsmittel L ausgewählt ist aus Ethern, n-Butylacetat, Aceton, Dimethylsulfoxid, N,N-Dimethylformamid, N-Methylpyrrolidon, Kohlenwasserstoffen und aromatische Lösungsmitteln.

**6.** Verfahren gemäß einem der Ansprüche 1 bis 5, wobei das mindestens eine kosmotrope Salz K ein Anion umfasst ausgewählt aus der Gruppe bestehend aus Citrat, Sulfat, Dihydrogenphosphat, Acetat, Chlorid, Bromid, Iodid und Nitrat.

**7.** Verfahren gemäß einem der Ansprüche 1 bis 6, wobei das mindestens eine kosmotrope Salz K ein Kation umfasst ausgewählt aus der Gruppe bestehend aus Ammonium, Kalium, Natrium, Cäsium und Lithium.

**8.** Verfahren gemäß einem der Ansprüche 1 bis 7, wobei als kosmotropes Salz K eine Mischung von mindestens zwei kosmotropen Salzen eingesetzt wird.

**9.** Verfahren gemäß einem der Ansprüche 1 bis 8, wobei als mindestens eine Salzlösung S eine Ammoniumsulfat-Lösung, eine Kaliumcitrat-Lösung oder eine Mischung hiervon eingesetzt wird.

**10.** Verfahren gemäß einem der Ansprüche 1 bis 9, wobei das Gewichtsverhältnis der eingesetzten Salzlösung S zu der eingesetzten Polymer-Rohlösung R im Bereich von 1:10 bis 10:1 liegt.

**11.** Verfahren gemäß einem der Ansprüche 1 bis 10, wobei sich in Schritt a) mindestens eine wässrige Phase bildet und die in Schritt b) abgetrennte wässrige Phase mindestens ein weiteres Mal als Salzlösung S eingesetzt wird und die Schritte a und b mindestens zweimal durchlaufen werden.

**12.** Verfahren gemäß einem der Ansprüche 1 bis 11, wobei es sich bei der mindestens einen Salzlösung S um eine Ammoniumsulfat-Lösung handelt und wobei sich in Schritt a) eine wässrige Phase, eine organische Phase und eine Polymerphase bilden, und wobei der hochverzweigte Polyether P in der Polymerphase enthalten ist.

**13.** Verfahren gemäß einem der Ansprüche 1 bis 11, wobei es sich bei der Salzlösung S um eine Kaliumcitrat-Lösung ($K_3C_6H_5O_7$) handelt und wobei sich in Schritt a) eine wässrige Phase und eine organische Phase bilden, wobei der hochverzweigte Polyether P in der organischen Phase enthalten ist.

**14.** Verwendung einer Salzlösung S, enthaltend mindestens ein kosmotropes Salz K zur Extraktion einer Polymer-Rohlösung R, enthaltend mindestens einen hochverzweigten Polyether P und mindestens ein organisches Lösungsmittel L.

**15.** Verwendung gemäß Anspruch 14, wobei es sich bei der Salzlösung S um Ammoniumsulfat-Lösung, Kaliumcitrat-Lösung oder eine Mischung hiervon handelt.

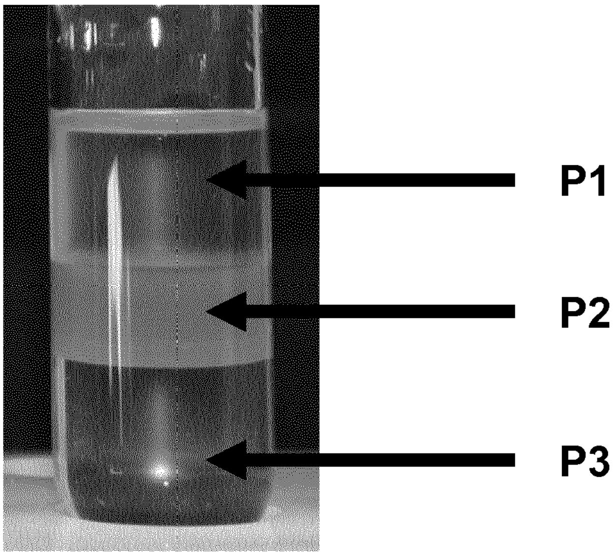


Fig. 1

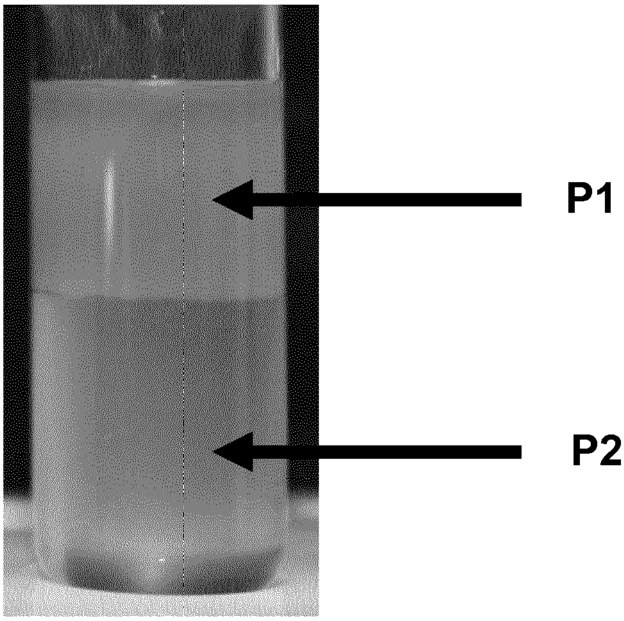


Fig. 2

Europäisches Patentamt
European Patent Office
Office européen des brevets

# EUROPÄISCHER RECHERCHENBERICHT

Nummer der Anmeldung
EP 14 19 4421

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 98/17708 A1 (MDV TECH INC [US]; REEVE LORRAINE E [US]; HINSBERG MICHAEL G [US]) 30. April 1998 (1998-04-30) * Anspruch 1; Beispiel 1 * * Seite 1, Zeile 7 * ----- | 14,15 | INV. C08G65/30 C08G65/46 C08G83/00 |
| A | WO 2005/100441 A2 (PLUROMED INC [US]; REEVE LORRAINE E [US]; HINSBERG MICHAEL G [US]) 27. Oktober 2005 (2005-10-27) * Anspruch 1; Beispiele 6,8,9 * * Seite 11, Zeilen 5-10 * ----- | 1-15 | |
| A | YEN D R ET AL: "FRACTIONAL PRECIPITATION OF STAR POLY(ETHYLENE OXIDE)", MACROMOLECULES, AMERICAN CHEMICAL SOCIETY, Bd. 29, Nr. 27, 30. Dezember 1996 (1996-12-30), XP000637122, ISSN: 0024-9297, DOI: 10.1021/MA961184Y * das ganze Dokument * ----- | 1-15 | |
| A | WO 2005/075527 A1 (GEN HOSPITAL CORP [US]; BANERJEE PALLAB [US]; BOGDANOV ALEXEI [US]; WE) 18. August 2005 (2005-08-18) * Beispiel 18 * ----- | 1-15 | RECHERCHIERTE SACHGEBIETE (IPC) C08G |
| A | EP 2 042 539 A1 (DAINIPPON INK & CHEMICALS [JP]) 1. April 2009 (2009-04-01) * Beispiele 1-6 * ----- | 1-15 | |
| A | WO 02/14380 A2 (REEVE LORRAINE E [US]; HINSBERG MICHAEL G [US]) 21. Februar 2002 (2002-02-21) * Anspruch 1; Beispiel 1 * ----- | 1-15 | |

Der vorliegende Recherchenbericht wurde für alle Patentansprüche erstellt

2

| Recherchenort | Abschlußdatum der Recherche | Prüfer |
|---|---|---|
| Den Haag | 1. April 2015 | O'Sullivan, Timothy |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 14 19 4421

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-04-2015

| Im Recherchenbericht angeführtes Patentdokument | Datum der Veröffentlichung | Mitglied(er) der Patentfamilie | Datum der Veröffentlichung |
|---|---|---|---|
| WO 9817708 A1 | 30-04-1998 | AU 4977597 A | 15-05-1998 |
| | | US 5800711 A | 01-09-1998 |
| | | WO 9817708 A1 | 30-04-1998 |
| WO 2005100441 A2 | 27-10-2005 | US 2004266983 A1 | 30-12-2004 |
| | | WO 2005100441 A2 | 27-10-2005 |
| WO 2005075527 A1 | 18-08-2005 | KEINE | |
| EP 2042539 A1 | 01-04-2009 | CN 101472973 A | 01-07-2009 |
| | | EP 2042539 A1 | 01-04-2009 |
| | | KR 20090048396 A | 13-05-2009 |
| | | US 2009286940 A1 | 19-11-2009 |
| | | WO 2007148383 A1 | 27-12-2007 |
| WO 0214380 A2 | 21-02-2002 | US 2002137973 A1 | 26-09-2002 |
| | | US 2004222155 A1 | 11-11-2004 |
| | | WO 0214380 A2 | 21-02-2002 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2010000713 A
- WO 20110006838 A
- WO 2012028527 A
- WO 2006008130 A
- US 5962749 A
- WO 20110015361 A
- WO 2011006838 A


### In der Beschreibung aufgeführte Nicht-Patentliteratur


- **YANG LU et al.** *Journal of Chemical and Engineering Data,* 2013, vol. 58 (1), 118-127
- **H. FREY et al.** *Acta Polym.,* 1997, vol. 48, 30
- **P.J. FLORY.** *J. Am. Chem. Soc.,* 1952, vol. 74, 2718
- **H. FREY et al.** *Chem. Eur. J,* 2000, vol. 6 (14), 2499